Europäisches Patentamt

European Patent Office

Office européen des brevets

(11) Veröffentlichungsnummer: **0 354 382**
**A1**

(12) **EUROPÄISCHE PATENTANMELDUNG**

(21) Anmeldenummer: 89113002.3

(22) Anmeldetag: 15.07.89

(51) Int. Cl.4: **G08B 13/18**

(30) Priorität: 20.07.88 DE 3824639

(43) Veröffentlichungstag der Anmeldung:
**14.02.90 Patentblatt 90/07**

(84) Benannte Vertragsstaaten:
**AT BE CH DE ES FR GB IT LI NL SE**

(71) Anmelder: **GEUTEBRÜCK VIDEOTECHNIK GMBH**
**Gartenstrasse 12**
**D-5340 Bad Honnef 1(DE)**

(72) Erfinder: **Beis, Uwe, Dipl.-Ing.**
**Sonnenweg 25**
**D-3008 Garbsen 9(DE)**

(74) Vertreter: **Arendt, Helmut, Dipl.-Ing.**
**Hubertusstrasse 2**
**D-3000 Hannover 1(DE)**

(54) Optische Überwachungseinrichtung.

(57) Zur Überwachung von Objekten wird eine Kamera vorgeschlagen, die sowohl mit einem Farbbildaufnehmer (11) als auch mit einem Aufnahmeteil (4) für Schwarzweißbilder und mit Elementen zur In-und Außerbetriebsetzung der Aufnahmeteile (4, 11) in Abhängigkeit von Helligkeitswerten des einfallenden Lichtes ausgerüstet ist.

Über die Leitung (10) wird ein Elektromagnet betätigt, der in Abhängigkeit von der Helligkeit den Spiegel (13) umschaltet.

Fig. 1

EP 0 354 382 A1

## Optische Überwachungseinrichtung

Die Erfindung betrifft eine optische Überwachungseinrichtung unter Verwendung einer Fernsehkamera.

Zum Überwachen von Objekten, beispielsweise Einrichtungen innerhalb von Gebäuden, einzelnen Gebäuden und ganzen Anlagen in ausgedehnten Geländebereichen, auf denen sich zahlreiche zu überwachende Einrichtungen befinden, ist es bekannt, Fernsehkameras zu verwenden, die zum Teil ständig Bilder auf Monitoren erzeugen. Neben Fernsehkameras für Schwarzweißbilder wird aufgrund ihres größeren Informationsgehalts angestrebt, für Überwachungseinrichtungen auch Farbbildkameras einzusetzen. Es ist jedoch bekannt, daß Kameras zur Herstellung von Schwarzweißbildern wesentlich geringere Lichtstärken erfordern als Kameras für Farbbilder. Farbfernsehkameras sind also wesentlich lichtunempfindlicher

Schwierigkeiten ergeben sich daher bei der Überwachung während der Nachtstunden. Während dieser Zeit muß eine Farbfernsehkamera mit wesentlich stärkerem Licht versorgt werden als eine Schwarzweißkamera. Durch die erforderlichen größeren Beleuchtungsstärken ergeben sich erhebliche Mehrkosten für die auf zuwendende Energie. Zur Energieeinsparung war es bisher bekannt, bei einem größeren zu überwachenden Objekt wandernde Lichtquellen zu verwenden. Dabei wurden immer nur die Lichtquellen der jeweils in Betrieb gesetzten Kameras eingeschaltet.Dadurch wurde eine ständige Beleuchtung aller zu überwachenden Objekte vermieden. Nach diesem Verfahren werden also nur begrenzte Bereiche beleuchtet. Es ist auch bekannt, die Lichtquellen nur bei Bedarf durch Alarmmelder in Betrieb zu setzen. Es wird jedoch angestrebt, ständig ohne Unterbrechung Bilder von den zu überwachenden Objekten zu erzeugen.

Aufgabe der Erfindung ist es, eine Überwachungseinrichtung zu schaffen,mit der die Vorteile der geringeren Lichtenergieanforderung durch die Schwarzweißbildkameras mit dem Informationsgehalt von farbigen Bildern verbunden werden können. Die Einrichtung soll dabei insbesondere in der Lage sein, bei genügendem Helligkeitsangebot Farbbilder zu erzeugen und bei geringeren Lichtwerten, beispielsweise während der Nachtstunden, Schwarzweißbilder herzustellen.

Die erfindungsgemäße Lösung zeichnet sich dadurch aus, daß die Kamera sowohl mit einem Farbbildaufnehmer als auch mit einem Aufnahmeteil für Schwarzweißbilder und mit Elementen zum In- und Außerbetriebsetzen der Aufnahmeteile in Abhängigkeit vom Helligkeitswert des einfallenden Lichtes ausgerüstet ist. Der Farbaufnahmeteil wird hierbei in Betrieb gesetzt, wenn ein ausreichendes Lichtangebot zur Verfügung steht und außer Betrieb gesetzt, wenn das Lichtangebot zu gering ist. Vom Farbaufnahmeteil wird dann auf den Schwarzweißaufnahmeteil übergegangen

Das Umschalten von einem Aufnahmeteil auf den anderen kann durch einen lichtempfindlichen Schalter, beispielsweise Dämmerungsschalter, vorgenommen werden, der umschaltet, wenn die Helligkeitswerte einen Grenzwert unterschreiten. Alternativ dazu ist auch die Stärke des elektrischen Ausgangssignals verwendbar.

Dabei kann das Umschalten von dem Farbaufnehmer auf den Schwarzweißaufnehmer beim Unterschreiten der Grenzwerthelligkeit schlagartig erfolgen oder fließend sein. Im erstgenannten Falle ist es möglich, einen Schwenkspiegel oder ein Schwenkprisma einzusetzen, das den Strahlengang verändert, so daß wechselweise der Farbaufnahmeteil oder der Schwarzweißaufnahmeteil in den Strahlengang geschaltet werden. Bei einem fließenden Übergang können beide Bildaufnehmer ständig mit dem Licht des Aufnahmebildes versorgt werden. In diesem Falle wird bei abnehmender Helligkeit das Ausgangssignal des Farbteils allmählich unter den Grenzwert fallen, so daß nur noch ein Schwarzweißbild zur Verfügung steht, wobei allmählich das Ausgangssignal des Schwarzweißteils das des Farbteils überwiegt.

Es besteht jedoch auch die Möglichkeit, nur einen einzigen Aufnahmeteil zu verwenden, dessen elektronische Bildaufnahmeelemente (Pixel) zum Teil für Farbaufnahmen und zum Teil für Schwarzweißaufnahmen vorgesehen sind. Zur Erhöhung der Lichtempfindlichkeit werden vorzugsweise die Zahl und/oder Größe der Schwarzweißbildaufnahmeelemente die farbigen überwiegen, so daß zwar die Lichtempfindlichkeit des Farbteils weiter herabgesetzt wird, aber noch ausreichend ist für Aufnahmen während des Tages und die Bildqualität für die Nachtstunden durch den Schwarzweißanteil verbessert wird. Der Bildaufnehmer hätte in diesem Falle getrennte Ausgänge für Farb- und Schwarzweißsignale. Der Gesamtanteil der Bildaufnahmeelemente (Pixel) kann größer sein als bei einer heute üblichen Farbfernsehkamera oder in einer Schwarzweißkamera. Der Übergang von der Farbwiedergabe auf die Schwarzweißwiedergabe ist fließend. Diese Variante hat den Vorteil, daß beim Übergang von einem Aufnahmeteil auf den anderen die Bilder zwangsläufig deckungsgleich sind,so daß kein zusätz licher technischer Aufwand zur Einstellung der Deckungsgleichheit notwendig ist.

In der Zeichnung sind drei Ausführunsbeispiele der Erfindung rein schematisch in Form von Blockschaltbildern dargestellt und nachstehend erläutert.

Es zeigen:

Fig. 1 eine Ausführung mit zwei getrennten Bildaufnehmern, von denen nur einer in Abhängigkeit von der Lichtstärke in den Strahlengang schaltbar ist.

Fig. 2 eine weitere Ausführungsform mit zwei getrennten Bildaufnehmern, die beide gleichzeitig und ständig einen Teil des einfallenden Lichtes des abzulichtenden Objektes erhalten, wobei vorzugsweise der Bildaufnehmer für die Schwarzweißbilder den größeren Anteil erhält

Fig. 3 eine dritte Ausführungsform mit einem Bildaufnehmer.

Über das optische Linsensystem (Objektiv) 1 wird der einfallende Lichtstrahl 2 des zu überwachenden Objekts auf einen um 90° schwenkbaren Spiegel 3 geworfen. Der Spiegel wirft im gezeigten Beispiel die Lichtstrahlen auf einen Schwarzweißbildaufnehmer 4, der seine Bildsignale über eine Leitung 5 einem Signalaufbereiter für Schwarzweißbilder 6 zuführt. Das aufbereitete Schwarzweißbild gelangt über die Leitung 7 in eine von der Stärke des Signals abhängigen Bildauswahl- und Spiegelumschaltung 8, ehe es in Form eines Bildausgangssignals die Kamera bei 9 verläßt.

Der Spiegelumschalter 8 ist über eine Verbindungsleitung 10 mit dem Spiegel 3 verbunden. Der Stellmechanismus (z.B. ein Elektromagnet) für den Spiegel ist zur Erhaltung der Übersichtlichkeit der Skizze nicht dargestellt. Sobald es die Helligkeit zuläßt, d.h. ein Helligkeitsgrenzwert nach oben überschritten wird, kann der Spiegel 3 in die in unterbrochener Strichführung dargestellte Position 3a geschwenkt werden. Der Strahlengang trifft nunmehr auf den Farbbildaufnehmer 11, der sein Bildsignal über die Leitung 12 analog dem Schwarzweißteil einem Bildsignalaufbereiter für das Farbbild 13 zuführt. Das aufbereitete Farbbild wird über die Verbindung 14 zunächst wieder dem signalstärkenabhängigen Bildauswahl- und Spiegelumschalter 8 zugeführt, um von dort über die Leitung 9 als Bildausgangssignal die Kamera zu verlassen.

Den Bildteilen der Kamera ist ein Takt- bzw. Ablenksignalerzeuger 15 zugeordnet, der für die Abstimmung der Bildaufnehmer mit den zugehörigen Signalaufbereitern sorgt.

Die Takt- bzw. Ablenksignalerzeugung entspricht in ihrer Funktion derjenigen in herkömmlichen Schwarzweiß- oder Farbkameras. In Röhrenkameras sorgt sie für eine zeilenweise Führung (Ablenkung) des Elektronenstrahls zur Abtastung der lichtempfindlichen Schicht.

In Halbleiter-Bildaufnehmern sorgt sie dafür, daß die in den Bildaufnahmeelementen gespeicherte Ladung (die der an der entsprechenden Stelle vorhandenen Helligkeit entspricht), zum richtigen Zeitpunkt am Ausgang des Bildaufnehmers erscheint

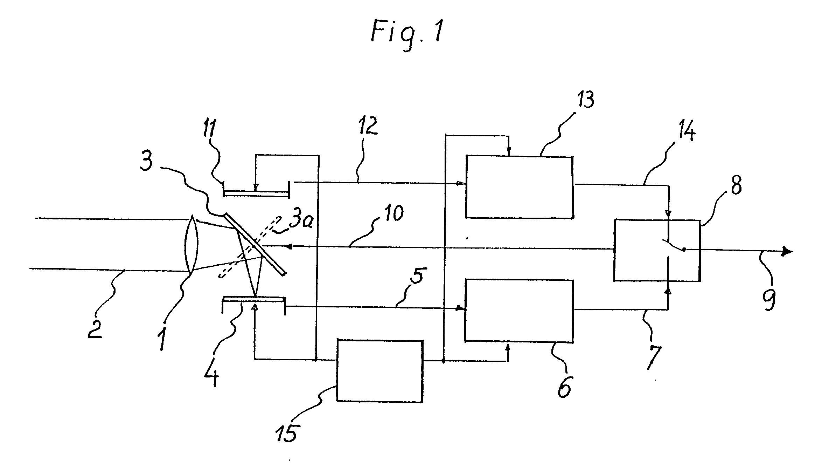

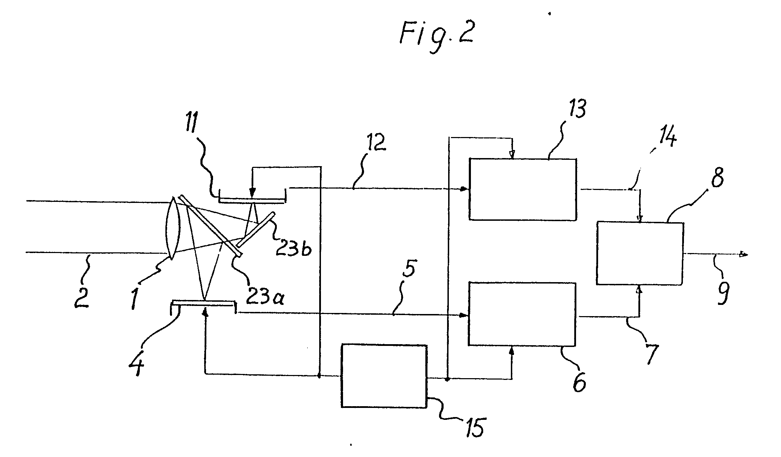

Eine Vereinfachung ergibt sich bei der Ausführungsform gemäß Fig. 2. An Stelle eines umschaltbaren Spiegels ist ein teildurchlässiges Spiegelsystem getreten, das aus zwei Spiegeln besteht, von welchen der Spiegel 23a als semipermeabler Spiegel ausgebildet ist, während der Spiegel 23b total reflektierend ist. Dadurch erhalten der Schwarzweißbildaufnehmer 4 und der Farbbildaufnehmer 11 gleichzeitig und ständig einen Teil des vom Objekt hergeleiteten Bildstrahls. Beide Bildaufnehmer erzeugen ständig und gleichzeitig die entsprechenden Signale und führen sie den ihnen zugeordneten Signalaufbereitern 6 bzw. 13 zu. Die aufbereiteten Schwarzweiß- und Farbbilder werden in eine Schaltung für signalstärkenabhängige Bildumblendung geleitet bevor sie die Kamera über den Ausgang 9 verlassen. Die Verbindung von der signalstärkenabhängigen Schaltung 8 zum Spiegelsystem ist entfallen. Alle übrigen elektronischen Bausteine entsprechen denen der Ausführung nach Fig. 1 und zeigen auch dementsprechend die gleichen Bezugsziffern. Das teildurchlässige Spiegelsystem kann auch durch ein Prisma ersetzt werden.

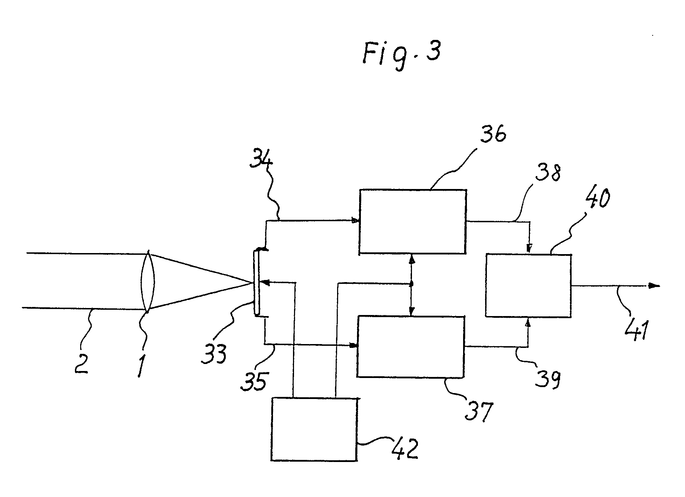

Eine weitere Alternative und gleichzeitig vereinfachte Schalteinrichtung zeigt die Ausführung nach Fig 3. Es ist nur noch ein Bildaufnehmer 33 für die Schwarzweißbild- und Farbbildaufnahme vorhanden. Der Bildaufnehmer ist mit zwei Bildsignalanschlüssen 34 und 35 für Farbbilder bzw. Schwarzweißbilder versehen. Der Bildaufnehmer weist je einen getrennten Satz von Bildaufnahmeelementen (Pixel) für Schwarzweiß und Farbe auf. Dabei ist vorzugsweise die Zahl und/oder Größe der Schwarzweißbildaufnahmeelemente größer als die für die Farbbilder vorgesehenen Pixel. Es sind wieder zwei Signalaufbereitungskreise 36 und 37 für Farbbilder bzw. Schwarzweißbilder vorhanden. Von dort führen Leitungen 38 und 39 zu einem Schaltbaustein für die signalabhängige Bildumblendung 40, bevor das Bildausgangssignal die Kamera über die Leitung 41 verläßt. Die zugehörige Takt- bzw. Ablenksignalerzeugung ist mit 42 bezeichnet, die über entsprechende Leitungen mit dem Bildaufnehmer und den Bausteinen für die Signalaufbereitungen verbunden ist.

Zur Vermeidung von Übersteuerrungen des S/W-Aufnehmers sowie zur Empfindlichkeitsanpassung beider Aufnahmeteile kann die Takterzeugung dafür sorgen, daß die in dem S/W-Pixeln bei hoher Beleuchtungsstärke entstehende Ladung in wesentlich kürzeren Zeitabständen abgebaut wird als es bei normalem Auslesen der Fall ist.

Es ergibt sich dabei eine virtuell kürzere Belichtungszeit. Diese Technik ist auch unter dem Begriff "Electronic Shutter" bzw. "Elektronischer Verschluß" bekannt.

**Ansprüche**

1. Optische Überwachungseinrichtung unter Verwendung einer Fernsehkamera, dadurch gekennzeichnet, daß die Kamera sowohl mit einem Farbbildaufnehmer als auch mit einem Aufnahmeteil für Schwarzweißbilder und mit Elementen zum In- und. Außerbetriebsetzen der Aufnahmeteile in Abhängigkeit vom Helligkeitswert des einfallenden Lichtes ausgerüstet ist.

2. Optisches Gerät nach Anspruch 1, dadurch gekennzeichnet, daß das einfallende Licht durch einen helligkeitsabhängig schaltbaren Schwenkspiegel jeweils auf einen der Bildaufnehmer leitbar ist

3. Optisches Gerät nach Anspruch 1, dadurch gekennzeichnet, daß sich beide Bildaufnehmer gleichzeitig und ständig durch ein halbdurchlässiges Spiegelsystem im Strahlengang des einfallenden Lichtes befinden.

4. Optische Überwachungseinrichtung .unter Verwendung einer Fernsehkamera, dadurch gekennzeichnet, daß die Kamera mit einem Bildaufnehmer mit zwei getrennten Ausgängen für Schwarzweißund Farbsignalen ausgerüstet ist, in welchem Bildaufnahmeelemente (Pixel) sowol für Farb- als auch für Schwarzweißbilder angeordnet sind

5. Optische Überwachungseinrichtung nach Anspruch 4, dadurch gekennzeichnet, daß die Zahl und/oder Größe (Emissionskapazität) der Bildaufnehmeelemente für Schwarzweißbilder die der Aufnahmeelemente für Farbbilder überwiegt.

Fig.1

Fig.2

Fig. 3

Europäisches
Patentamt

**EUROPÄISCHER RECHERCHENBERICHT**

Nummer der Anmeldung

EP 89 11 3002

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | US-A-4 293 876 (J.L. WILLIAMS) <br> * Figur 1, Zusammenfassung * <br> --- | 1 | G 08 B 13/18 |
| Y | PATENT ABSTRACTS OF JAPAN <br> Band 8, Nr. 88 (E-240)(1525), 21. April 1984; & JP - A - 59 8492 (MITSUBISHI DENKI) 17.01.1984 <br> --- | 1 | |
| X | US-A-3 891 795 (Q.S. JOHNSON et al.) <br> * Figur 2, Zusammenfassung * <br> --- | 2 | |
| P,A | PATENT ABSTRACTS OF JAPAN <br> Band 12, Nr. 412 (E-676)(3259), 31. Oktober 1988; & JP - A - 63 149979 (RICOH) 22.06.1988 (Kat. A) <br> --- | | |
| A | PATENT ABSTRACTS OF JAPAN <br> Band 4, Nr. 137 (E-27)(619), 25. September 1980; & JP - A - 55 90192 (MINOLTA CAMERA) 08.07.1980 <br> ----- | | |

**RECHERCHIERTE SACHGEBIETE (Int. Cl.5)**

G 08 B
H 04 N

Der vorliegende Recherchenbericht wurde für alle Patentansprüche erstellt

| Recherchenort | Abschlußdatum der Recherche | Prüfer |
|---|---|---|
| BERLIN | 24-10-1989 | BREUSING J |